# EUROPEAN PATENT SPECIFICATION

(11) **EP 2 827 461 B1**
(45) Date of publication and mention of the grant of the patent: **18.05.2022**
(21) Application number: 14177007.3
(22) Date of filing: 15.07.2014
(51) Int. Cl.: H01S 3/23, H01S 3/067, H01S 3/16, H01S 3/00

(54) **Method and laser source for generation of optically synchronized dual-wavelength ultrashort light pulses**
Verfahren und Laserquelle zur Erzeugung von optisch synchronisierten ultrakurzer Lichtimpulsen bei zwei Wellenlängen
Procédé et source laser pour la génération d'impulsions de lumière ultracourtes optiquement synchronisées à deux longueurs d'onde

(30) Priority: 17.07.2013 LT 2013076
(43) Date of publication of application: 21.01.2015
(73) Proprietor: UAB "Ekspla", 02300 Vilnius (LT)
(72) Inventor: Rusteika, Nerijus, 02300 Vilnius (LT); Michailovas, Andrejus, 02300 Vilnius (LT); Danilevicius, Rokas, 02300 Vilnius (LT); Vosylius, Vytautas, 02300 Vilnius (LT)
(74) Representative: Draugeliene, Virgina Adolfina

(56) References cited:
- J ADAMONIS ET AL: "High-energy Nd : YAG-amplification system for OPCPA pumping", QUANTUM ELECTRONICS, vol. 42, no. 7, 31 July 2012 (2012-07-31), pages 567-574, XP055188502, ISSN: 1063-7818, DOI: 10.1070/QE2012v042n07ABEH014689
- STANISLAUSKAS T ET AL: "Continuum seeded OPCPA system driven by tandem fs Yb:KGW and ps Nd:YAG lasers", 2014 CONFERENCE ON LASERS AND ELECTRO-OPTICS (CLEO) - LASER SCIENCE TO PHOTONIC APPLICATIONS, THE OPTICAL SOCIETY, 8 June 2014 (2014-06-08), pages 1-2, XP032708688, [retrieved on 2014-12-16]
- "PHAROS High-power Femtosecond Laser System", , 18 April 2011 (2011-04-18), XP055188522, Retrieved from the Internet: URL:http://www.lightcon.com [retrieved on 2015-05-11]

## Description

This invention relates to the laser field, particularly to laser sources with dual output. It provides a method and a laser source for generation of two optically synchronized ultrashort light pulses differing in central wavelengths and spectral widths. This invention can be used in systems of optical parametric amplification wherein high-peak-power pulses can be obtained demanded by world-leading scientific research and also have variety of applications in medicine and industry.

Synchronized dual-wavelength light pulses are required in optical parametric amplification systems. The optical parametric amplification is a way to obtain tunable laser radiation. Moreover, optical parametric amplification devices have several distinctive features that make them suitable for amplification of ultrashort light pulses. An effective amplification of very short, shorter that one picosecond, light pulses requires a method known as optical parametric chirped pulse amplification (OPCPA). A peak power up to several hundred of terawatts is achieved only with OPCPA systems.

The optical parametric amplification device consists mainly of a nonlinear crystal in which (if the energy and momentum conservation laws are satisfied) energy can be transferred from a pump wave to signal and idler waves of other wavelengths. The parametric device wherein not only the pump radiation but also a weak seed radiation impinges upon the nonlinear crystal is referred to as an optical parametric amplifier (OPA). In this case a wavelength of the seed must coincide with the one of the waves intended to be generated, preferably the signal wave. In order to obtain a high amplification efficiency as well as a high beam quality an additional condition must be satisfied: beams of the pump wave and the seed must overlap in space and time within a volume of the nonlinear crystal.

A higher gain is achieved with a pulsed pumping, for example with durations of pump pulses of one-hundred picosecond range. In order to obtain extremely-high-peak-power pulses, durations of both pump and seed pulses should be from the range of picoseconds. Overlapping of two ultrashort light pulses in space and time requires high accuracy of the system and precise synchronization of the pump and seed pulses. Pulse synchronization of the dual-wavelength ultrashort light pulses is one of the main technical tasks in parametric amplification systems. For example, for lOps pulses, a temporal precision should be better than 1ps, i.e. one tenth of the pulse duration. And that is equivalent to a requirement that a laser resonator length is controlled within microns.

There are known active methods of synchronization of dual-wavelength ultrashort light pulses utilizing high-frequency electronics and feedback loops. Patents US6181463 (Galvanauskas et al.)*,* US6728273 (Perry)*,* US6870664 (Jovanovic et al.)*,* US6791743 (Jovanovic et al.) describe systems of optical parametric amplification comprising two independent seed and pump laser sources which are controlled by a single electric pulse generator. The active synchronization is complex and expensive, and a practical implementation of it is possible only in low repetition rate systems.

There are also known passive methods of synchronization of dual-wavelength ultrashort light pulses (also called optical synchronization). Such systems comprise a single primary laser source, output pulses of which undergo several forming stages and turn into seed and pump pulses with different wavelengths and spectral widths. Numerous publications (C.Y.Teisset et al., Opt. Exp. 13, 6650-6657 (2005); N.Ishii et al., Sel.Tops. in QE12, 173-180 (2006); J.Rothhardt et al., Opt. Exp. 17, 24130-24136 (2009); F.Tavella et al., Opt. Exp. 18, 4689-4694 (2010); D.Yashitomi et al., Opt. Exp. 18, 26027-26036 (2010); A.Harth et al., Opt. Exp. 20, 3076-3081 (2012)) describe OPCPA systems comprising a laser source of optically synchronized dual-wavelength ultrashort light pulses which starts from a mode-locked titanium sapphire (Ti:S) oscillator. Seed and pump pulses are taken directly from a broadband radiation of Ti:S or at least one of said pulses are formed by transforming or broadening an initial spectrum. Said transforming of the initial spectrum is implemented with the use of nonlinear effects in bulk crystals or photonic crystal fibers: difference frequency, sum frequency or harmonic generation, parametric amplification, Raman-shifting or solitonic self-frequency shifting. Spectral broadening is implemented by continuum or supercontinuum generation. An international patent application WO2006122709 (Ishii et al.) describes an OPCPA system wherein the primary laser source of optically synchronized seed and pump pulses comprises a mode-locked Ti:S oscillator and a neodymium (Nd) or ytterbium (Yb) doped solid state amplifier together with a foregoing photonic crystal fiber (PCF) positioned on a path of the pump pulse. The PCF fiber shifts a wavelength of oscillator's output pulse to overlap a stimulated emission peak of Nd-doped or Yb-doped active media.

The Ti:S oscillator actually is a dual-laser system because a second harmonic of another solid state laser or radiation of the argon laser is required for Ti:S pumping. Moreover, an effective cooling is necessary due to thermal effects occurring inside the Ti:S active medium. OPCPA systems which utilize a primary dual-wavelength laser source based on the Ti:S oscillator are complex, cost-consuming and require highly stabilized thermal conditions.

An alternative for the Ti:S lasers with free-space components are fiber lasers. Fibers have a high surface-area-to-volume ratio. Therefore, the effective cooling is achieved. As a result, an average power of up to kilowatts may be obtained and operation at high repetition rates is possible. Other advantages of fiber laser sources are resistance to environmental factors (changes in temperature or mechanical vibrations), easy transportation of radiation, high laser beam quality and an ease of assembling a system.

Currently, ytterbium (Yb) and erbium (Eb) based fiber lasers are most widely used amongst fiber laser sources. They feature a broad spectrum band that enables to obtain ultrashort pulses with a tunable wavelength. Yb-doped active media are more suitable for high power systems due to their low generation threshold and high stimulated emission cross-section. Other important features of Yb-lasers are: their luminescence band spans to 1100nm at the long-wave side, and the stimulated emission peak (1030nm) is close to amplification line (1064nm) of Nd-doped active media. This can be useful when trying to utilize Nd-amplifiers for further radiation amplification.

A.Fernández et al., Opt. Lett. 34, 2799-2801 (2009) describes a fiber-based laser source emitting optically synchronized ultrashort pulses which comprises a femtosecond Yb-doped fiber oscillator operating at 1040nm. A part of radiation emitted by the Yb-oscillator is directed to a seed branch of said source in which amplification and pulse forming stages are present. Another part of radiation emitted by said oscillator is directed straightly, without wavelength transformation, into a Nd-amplifier and is destined to be a pump pulse for a further parametric pulse amplification. A disadvantage of this prior art lies in that, without wavelength transformation, radiation of said oscillator carries little energy at amplification line of Nd ions. Therefore, an optical parametric amplification system with the incorporated laser source according to *Fernández et al.* solution has low efficiency.

An article Y.Zhou et al., SPIE Proc. 7582 (2010) and US patents US8023538 (Marcinkevicius et al.)*,* US8040929 (Imeshev et al.) describe OPCPA systems employing the laser source of optically synchronized dual-wavelength ultrashort pulses which comprises any one of Er, Er/Yb, Tm, Tm/Yb, Nd or Yb fiber oscillators. Forming stages of final seed and pump pulses include wavelength shifting (e.g., via second harmonic generation) or spectral broadening (e.g. via continuum or difference frequency generation) of at least one of output pulses of said oscillator.

The most usually performed procedure is continuum generation in photonic crystal fibers where many nonlinear effects take place simultaneously: self-phase modulation, Raman scattering, four-wave mixing. The main drawback of aforementioned solution - said nonlinear effects need for a relatively high initial intensity. Secondly, total efficiency of said laser source comprising a continuum generator is low because only a small fraction of the broad continuum spectrum is used. Additionally, PCF fibers are expensive and also are hard to incorporate into single-mode fiber systems.

Another technical task related to the employment of the single primary dual-wavelength laser source in the OPCPA system is selection of a pump pulse amplifier. Nd:YAG or any other solid state Nd-amplifier is characterized by high gain and high quantum efficiency. Free-space optics is also developed for Nd spectral region. Another aspect - a chirped pulse amplification (CPA) technique which generally has advantages because it offers high energy conversion efficiency is difficult to implement in amplification of narrowband pulses. It requires sophisticated and/or space-consuming pulse stretchers and compressors such as, for example, described in publications M.Y.Shverdin et al., Opt. Lett. 35, 2478-2480 (2010) and US8068522 (Barty et al.)*.* Therefore, when utilizing the Nd-amplifier in the OPCPA system as a pump pulse amplifier, it is important to find an optimal way of obtaining a spectral band from the radiation of the initial oscillator that overlaps the stimulation emission line of Nd-doped active media. It is also important to find a solution for a narrowband pulse stretching in time which is necessary for implementation of the CPA technique.

J. Adamonis et al., Quantum Electronics 42, 567-574 (2012) presents Nd:YAG-based amplification system for OPCPA pumping, wherein the Nd:YAG amplifier is directly seeded with broadband pulses of an Yb:KGW oscillator. Said oscillator also provides 60fs pulses for a seed-branch of the OPCPA system. The pulse amplified in the Nd:YAG amplifier is optically synchronized with said pulse of the seed-branch. The broad spectral band of the initial laser radiation from said Yb:KGW oscillator ensures that no additional spectral broadening is needed for obtaining a dual-wavelength output and ensuring a femtosecond pulse duration of the seed pulse in the OPCPA system.

Another prior art relevant to this invention is disclosed by Marcinkevicius et al. (US8023538). Here a method for generation of optically synchronized dual-wavelength ultrashort light pulses comprises generation of initial laser radiation, its pre-amplification, spectral broadening and, finally, formation of output pulses. A central wavelength λ₀ of said initial laser radiation may be selected from a luminescence band of Yb-doped active media. A central wavelength of pre-amplified radiation coincides with the central wavelength λ₀ of the initial laser radiation. The spectral broadening may comprise continuum or supercontinuum generation. Then, a first and a second output pulses are being formed from a spectrum of the spectrally broadened radiation by extracting two portions of the spectrum and amplifying the second of said extracted portions of the spectrum. A laser source according to *Marcinkevicius et al.* solution comprises a femtosecond fiber oscillator which may also be Yb-fiber-oscillator. A pulse of a pump-branch is amplified by a solid state amplifier. The aforementioned solution is focused on amplification and formation of seed and pump pulses in order to ensure maximum values of OPCPA output power and energy and also high beam quality.

In the known method and the source generation and formation of the initial radiation is not optimized for an aim of ensuring high efficiency and reliability of the whole source. The source with a femtosecond Yb-oscillator is inherently inefficient since inversion is converted into a broad spectrum of initial laser radiation and, further, only a part this radiation is used. Secondly, femtosecond oscillator must include pulse compressor to compensate complex dephasing of spectral components. This raises a price of the oscillator. The main drawback of femtosecond Yb-oscillators is their sensitivity to system parameters and environmental impacts. Femtosecond oscillators are less reliable than picosecond oscillators. Finally, said prior art does not provide a method for utilization of a CPA amplifier based on the narrowband neodymium-doped active medium.

The aim of this invention is to provide a compact and reliable laser source emitting optically synchronized dual-wavelength ultrashort light pulses. Another aim of this invention is to provide a simple and cost-effective primary laser source for passive synchronization of input channels of optical parametric amplification system. Yet another aim of this invention is to provide a laser source, output radiation of which has spectral properties which are consistent with amplifiers based on Nd-doped and Yb-doped active media, while phase modulation properties allow for a simple further forming and amplification of broadband as well as narrowband pulses.

This is achieved by the method and the laser source configured for generation of optically synchronized dual-wavelength ultrashort light pulses according to claims 1-12.

Particular embodiments of the method and the laser source configured for generation of optically synchronized dual-wavelength ultrashort light pulses according to the present invention are explained in greater detail with reference to the attached drawings, in which:
Fig.1 - a diagram illustrating a principle of this invention;
Fig.2 - a block scheme of the laser source of this invention;
Fig.3 - a block scheme of an optical parametric chirped pulse amplification (OPCPA) system with the incorporated laser source of this invention;
Fig.4 - a pulse envelope evolution when propagating through a medium possessing nonlinear and dispersive properties;
Fig.5A-Fig.5D - evolution of a radiation spectrum when an ultrashort pulse propagates through a medium possessing nonlinear and dispersive properties;
Fig.6A-Fig.6D - evolution of a chirp profile when an ultrashort pulse propagates through a medium possessing nonlinear and dispersive properties;
Fig.7 - the intensity distribution and chirp profile obtained in the system of this invention;
Fig.8 - an example of a spectral filtering device suitable for the system of this invention.

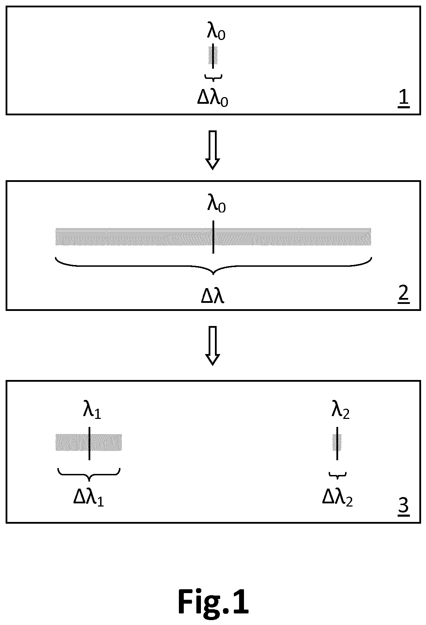

A principle of the method for generation of optically synchronized dual-wavelength ultrashort light pulses according to this invention is illustrated in a diagram of Fig.1. In an initial stage 1, narrowband laser radiation with a central wavelength λ₀ and a spectral width Δλ₀ is produced. In a further stage 2, it is supplemented with additional spectral components up to a spectral width Δλ. Finally (stage 3), two portions of a spectrum of the spectrally broadened radiation are extracted and may be amplified. These two portions of the spectrum are distinct in their central wavelengths λ₁, λ₂ and widths Δλ₁, Δλ₂. In other words, the initial stage 1 comprises a generation and pre-amplification of a picosecond pulse in a fiber laser, the second stage 2 comprises its spectral broadening on a basis of nonlinear-dispersive effects, the final stage 3 comprises spectral filtering, amplification and optionally pulse stretching. Embodiments of the present invention are presented in the following drawings.

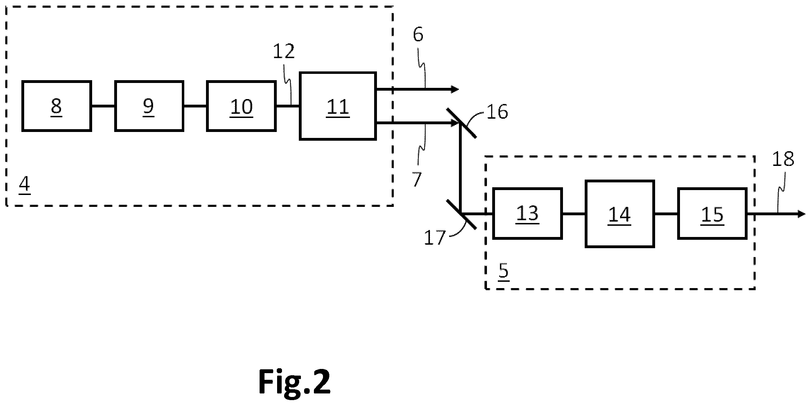

Fig.2 illustrates a laser system of this invention which is composed of a master generator 4 and a pump pulse amplifier 5. The master generator 4 is a fiber-based optical system emitting two synchronized ultrashort pulses 6 and 7 which may further be amplified by ytterbium (Yb) and neodymium (Nd) amplifiers. Radiation 6 outcoupled through a first output channel of the master generator 4 is characterized by a central wavelength λ₁ which corresponds to the peak of a stimulated emission band of Yb-doped active media, while a spectral band of radiation 6 is as broad as possible (in a further description radiation 6 will be referred to as a seed-branch or a broadband pulse). Radiation 7 outcoupled through a second output channel of the master generator 4 is characterized by a central wavelength λ₂ which corresponds to the stimulated emission line of Nd-doped active media. Herein, the words "corresponds to" mean that said wavelengths "coincide or are close to" said emission peaks. A spectral band of radiation 7 may be narrow (in a further description radiation 7 will be referred to as a pump-branch or a narrowband pulse). The pump pulse amplifier 5 is a Nd-doped chirped pulse amplifier.

The master generator 4 emitting two optically synchronized pulses 6 and 7 of central wavelengths λ₁, λ₂ and spectral widths Δλ₁, Δλ₂, respectively, is composed of an ytterbium-doped mode-locked fiber oscillator 8, an amplification system 9 consisting of at least one ytterbium-doped fiber amplifier, an optical element 10 which possesses nonlinear and dispersive properties and a spectral filtering device 11.

The Yb-doped mode-locked fiber oscillator 8 is designed to emit transform-limited ultrashort laser pulses at a wavelength λ₀, where the duration of pulses is from 1ps to 5 ps that corresponds to a spectral width Δλ₀ of about 1.5nm or less. A concrete value of the wavelength λ₀, which is selected from a broad ytterbium luminescence band, depends on a type of matrix of the Nd-doped active medium used in the succeeding amplifier 5 destined to amplify radiation 7. The wavelength adjustment in the oscillator 8 is accomplished by a free-space filter and/or a fiber Bragg grating. It is obtained from a few up to a few tens of milliwatts of average power directly from the oscillator.

Further, the generated pulse is amplified in the amplification system 9, consisting of one or more single-mode Yb-doped fiber amplifiers. An average power of up to a few hundred of milliwatts is obtained. This level of power is necessary to initiate self-phase modulation. Although nonlinearities start taking effect even inside the amplification system 9, a spectral width at the output of the amplifiers 9 is relatively narrow and does not overlap the wavelengths where stimulated emission of Yb-doped and Nd-doped active media is strongest. Therefore, the master generator 4 is supplemented with the nonlinear-dispersive optical element 10 by which radiation spectrum is broadened up to a width Δλ of about 40nm or larger, but not larger than 45nm.

Another important aspect - due to nonlinear and dispersive properties of the system, radiation 12 at an output of the element 10 is chirped, i.e. it has a modulation of instantaneous frequencies (or wavelengths). The chirp profile depends on nonlinear and dispersive parameters, also on the length of the whole fiber-system. In order to achieve the objectives of the present invention - to produce optically synchronized output pulses which are suitable for a further amplification in ytterbium and neodymium-doped active media, and also to ensure a reliable and cost-effective system - a single-mode optical fiber (SMF) is the most proper choice for the nonlinear-dispersive element 10. In a SMF fiber, above a certain pulse energy level, both dispersion and optical Kerr effect take place at the same time. Optical Kerr nonlinearity and dispersion parameters of conventional SMF fibers used in telecommunication allow for achieving of said about 40nm spectral width overlapping the stimulated emission peaks of Yb- and Nd-doped active media and also allow for obtaining a linear chirp in a wide central part of the pulse envelope. A suitable length of the SMF fiber is in an interval from 2m to 20m.

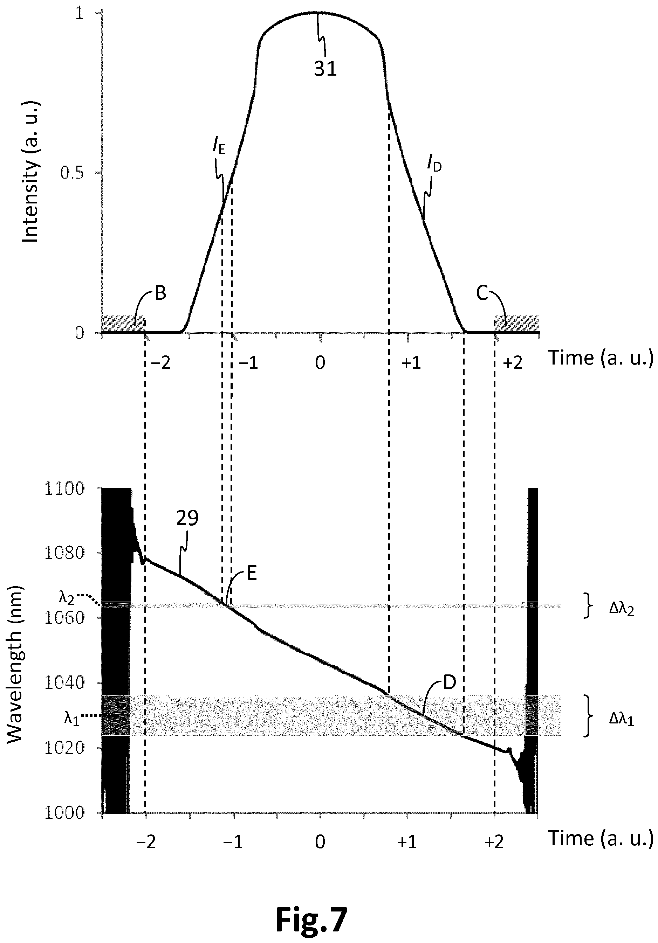

The dual-wavelength output pulses 6, 7 of the master generator 4, which are mutually synchronized, are obtained by the use of the spectral filtering device 11 as follows: two portions of a spectrum different in central wavelengths λ₁, λ₂ and spectral widths Δλ₁, Δλ₂, respectively, are extracted from a spectrally broadened radiation 12 of the spectral width Δλ. A first portion of the spectrum at about λ₁ = 1030nm corresponding to the amplification peak of Yb-amplifiers is outcoupled through the first output channel of the master generator 4 as the pulse 6. Its spectral width Δλ₁ is in a range from a few to 10nm. Since radiation is chirped it has a temporal length of a few picoseconds (the pulse is not transform-limited). The pulse energy is about a few hundred picojoules. The second output channel of the master generator 4 is adapted for Nd-amplifiers (Nd:YAG, Nd:YLF, Nd:YVO₄, Nd:KGW, etc.). According to the first embodiment of this invention, a portion of the spectrum of the width Δλ₂ < 1nm at λ₂ = 1064nm is outcoupled through the second output channel of the master generator 4 as the pulse 7. It lasts a few picoseconds in time and carries sub-lOOpJ of energy. Since there is a requirement that radiation 12 at the output of the element 10 must overlap 1030nm and 1064nm, the central wavelength λ₀ of the initial radiation has to be somewhere in the middle between 1030nm and 1064nm, at about λ₀ = 1047nm. The timing between the two output pulses 6 and 7 is constant because the initial oscillator 8 features high stability and, therefore, ensures reproducible chirp profile of radiation 12 at the output of the element 10 (a more explicit explanation is given in a description of Fig.7). The broadband pulse 6 is a first output pulse of the laser source of this invention.

Another important part of the laser system of present invention is the pump pulse amplifier 5. It is a chirped pulse amplifier based on an active medium doped with Nd ions or any other active medium whose amplification range covers the emission lines of Nd-doped materials. It contains a pulse stretcher 13, an amplifier 14 (which is actually a regenerative amplifier or a chain of regenerative and single-pass/multi-pass amplifiers) and a pulse compressor 15. According to the first embodiment of this invention, the active medium of said amplifier 14 is Nd:YAG.

The technique of chirped pulse amplification (CPA) is necessary in order to completely deplete inversion of the active medium. With the help of additional optical elements 16, 17 the few-picosecond (e.g. 8ps) output pulse 7 of the master generator 4 is directed to said pulse stretcher 13 where the pulse gets more strongly chirped and becomes a few-hundred-picosecond (from 200ps to 300ps) pulse. A narrowband pulse which already has a chirp can be stretched easier than a non-chirped pulse. A single-mode optical fiber with a length of (200-400)m or, alternatively, a chirped fiber or volume Bragg grating may serve as the pulse stretcher 13. When amplified in the amplifier 14, the pulse is compressed down to a few tens of picoseconds. One or several chirped volume Bragg gratings may serve as the pulse compressor 15. A narrowband amplified pulse 18 at the output of the pump pulse amplifier 5 is a second output pulse of the laser source of this invention. It is synchronized with the broadband pulse 6 and carries from a few to one hundred millijoules of energy.

In alternative embodiments of the present invention, the amplifier 14 may be based on Yb-doped active medium or may comprise a combination of Yb-doped and Nd-doped active media. As for example, the amplifier 14 may be a regenerative Yb-amplifier followed by several single-pass Nd-amplifiers.

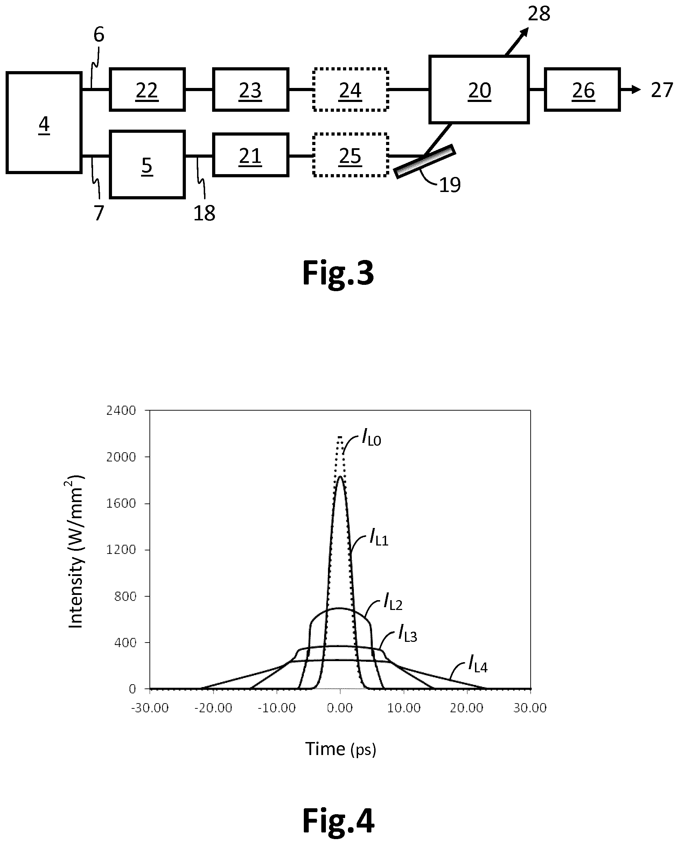

The laser source of the present invention, emitting optically synchronized dual-wavelength ultrashort light pulses 6 and 18, is suitable as a primary source for an optical parametric chirped pulse amplification (OPCPA) system. Fig.3 depicts an example of the OPCPA system with the incorporated laser source of Fig.2. With the use of beam-steering optical components 19 the two synchronized pulses 6 and 18 of the primary source are directed into a nonlinear parametric crystal 20 where they are overlapped in space and time. The narrowband amplified pulse 18 after changing its wavelength by, for example, second harmonic generation in another nonlinear crystal 21 satisfies necessary wavelength relationships and is suitable to be utilized as a pump wave in the optical parametric amplification. The broadband pulse 6 is stretched in a pulse stretcher 22 up to few tens of picoseconds and is already suitable as a seed for parametric amplification. In a preferable embodiment, before entering said nonlinear crystal 20, the stretched pulse is pre-amplified in one or more Yb-doped amplifiers 23 without narrowing radiation spectrum. Said amplifiers 23 are selected from a list of fiber or solid-state (for example, Yb:KGW or Yb:YAG) ytterbium-doped amplifiers. The pulse stretcher 22 and the Yb-amplifiers 23 act together as a chirped pulse amplifier what ensures an effective amplification of the ultrashort pulse. On a path of the seed pulse, other optical elements 24 may be present for an additional pulse formation. Analogously, additional optical elements 25 may be present on a path of the pump pulse: quantum amplifier chains or nonlinear crystals. After optical parametric amplification in the crystal 20, radiation is compressed with a pulse compressor 26 down to tens/hundreds of femtoseconds (pulse 27).

Configuration depicted in Fig.3 is given for illustrative purposes only. It does not cover all the possibilities of incorporation of the laser source of the present invention into OPCPA systems. Here are the main properties of the source of the present invention that give advantages to the OPCPA system: the master generator's 4 output pulses 6 and 7 are mutually synchronized and matched to the amplification range of Yb and Nd active media; nonlinear and dispersive properties of said generator 4 components allow for achieving chirped pulses whose modulation of instantaneous frequency is linear. These characteristics give two main advantages. First, the narrowband pulse 7 of the pump branch is chirped and, therefore, it is easier to stretch it in the pulse stretcher 13. This leads to a stronger amplification in the amplifier 5. Second, the broadband pulse 6 of the seed branch maintains the linear chirp in subsequent stages 22-24 as well as during the parametric amplification in the crystal 20. This gives a possibility to compress the pulse down to its transform limit even with a conventional pulse compressor 26 such as a pair of prisms or grating. A transform-limited duration of the compressed pulse 27 ensures the maximum available peak power to be achieved.

Further, an explanation is given in greater detail of why the dual-wavelength output pulses 6, 7 of the master generator 4 and, therefore, the two output pulses 6, 18 of the laser source of the present invention are synchronized in time though their wavelengths occur at different instants of time under the broadened pulse's 12 envelope. The nonlinear and dispersive properties of the generator 4 components ensure that it is possible to have a broad portion of the spectrum possessing a linear chirp near 1030nm. At the same, it is possible to have a narrow portion of the spectrum with a linear chirp at a wavelength of Nd-doped active media amplification peak. A time jitter between the pulses 6 and 7 (as well as pulses 6 and 18) is minimal.

When a light pulse propagates through a nonlinear-dispersive medium its spectrum and duration is influenced by effects of self-phase modulation (optical Kerr nonlinearity) and group velocity dispersion. This is particularly true for ultrashort pulses. Due to extremely short duration of the pulse instantaneous intensities exceed values at which self-phase modulation becomes noticeable (it manifests by broadening of spectrum and dephasing of spectral components). At the same time, with the increasing width of the spectrum a significance of dispersion grows. Said effects occur simultaneously. At spectral range of about one micron a standard quartz optical fiber features a normal dispersion. Therefore, it cannot compensate dephasing of spectral components induced by Kerr nonlinearity. Still, the dispersion influences a shape of a chirp profile strongly. In fiber optics, nonlinearities and dispersion are more significant than in free-space or bulk optics.

Elements of the master generator 4 of this invention (Fig.2) together act as a nonlinear-dispersive medium. Since they are fiber-optical, dispersion is significant. Additionally, in the amplification system 9 instantaneous intensities exceeding self-phase modulation threshold are achieved. Therefore, simultaneous spectral broadening and dephasing of spectral components due to self-phase modulation and due to dispersion occur. It is worth mentioning that, although in a preferable embodiment of the present invention a regular SMF fiber is used as the element 10, another optical element may be used, e. g. a tapered single-mode fiber, nonlinear and dispersive properties of which allow for achieving the sufficient spectral broadening and the required shape of chirp profile.

Fig.4-Fig.6D illustrate evolutions of pulse duration, spectrum and chirp profile during pulse propagation through a nonlinear-dispersive medium. Here L0 denotes an origin of the nonlinear-dispersive medium, L1-L4 are pulse propagation paths in said medium, where L1<L2<L3<L4. Initially, the pulse is defined by a maximum intensity I_{L0} and has Gaussian-like profile (Fig.4). After some propagation, it becomes a non-Gaussian pulse. With the increasing propagation path pulse intensity reduces (Fig.4, I_{L1}, I_{L2}, I_{L3}, I_{L4}), while its duration increases.

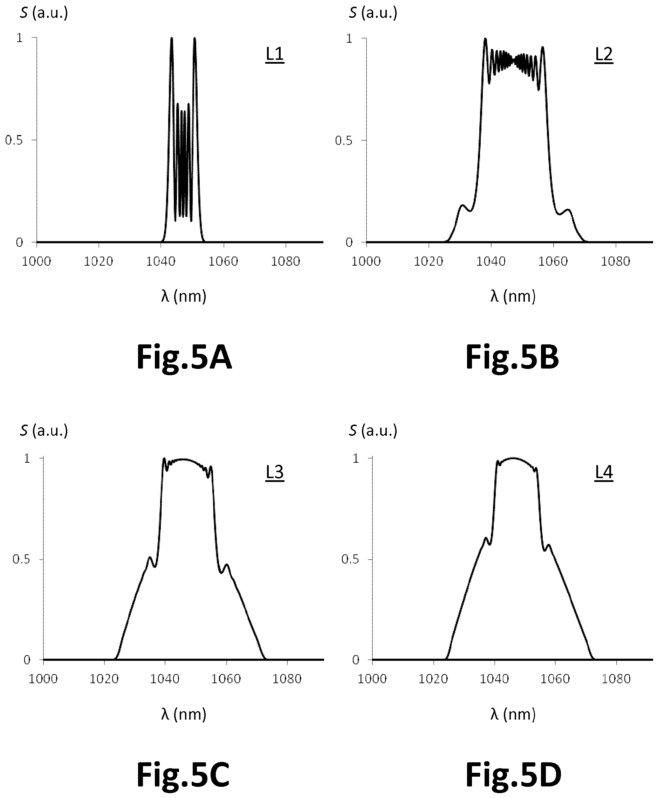

From spectral intensity distribution curves (Fig.5A-5D), it is seen that with the increasing propagation path a number of spectral components increases. At a certain distance (near about L4) the spectrum no longer broadens since intensity has reduced and self-phase modulation no longer occur. The distance L4 depends on nonlinear and dispersive properties of the medium and on the initial pulse intensity I_{L0}. Parameters of the master generator's 4 components allow for broadening of pulse spectrum up to 40nm and more. In case of λ₀ = 1047nm, a normalized spectral intensity S exceeds a value of 0.01 within a range from 1023nm to 1073nm, while within a range from 1026nm to 1070nm S ≥ 0.1. That means that the spectral width Δλ of the spectrally broadened radiation 12 defined at 1/10 level from the maximum spectral intensity is equal to 44nm.

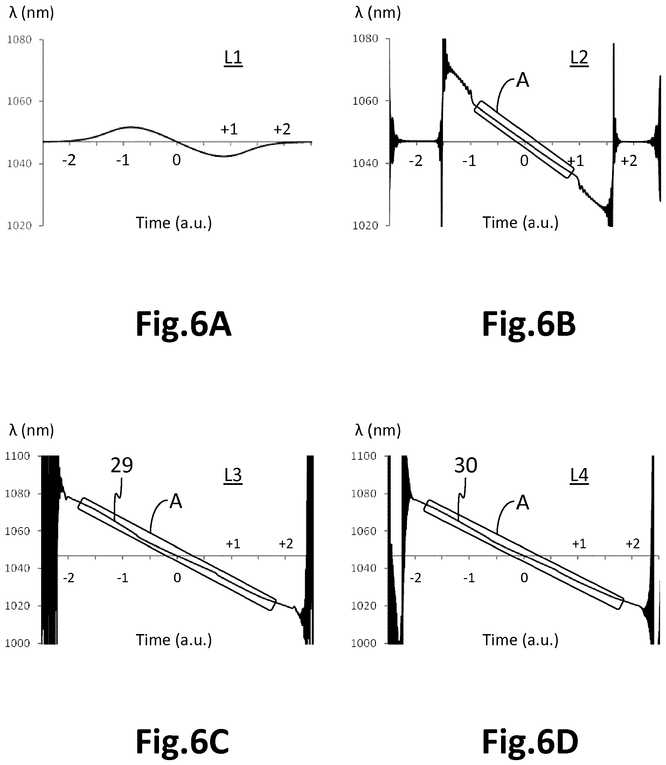

A chirp profile also evolves (see Fig.6A-Fig.6D; a time-scale is normalized to the pulsewidth at half maximum of pulse intensity; instantaneous spectral components are shown in wavelength scale). After a short propagation path (Fig.6A) in the nonlinear-dispersive medium, the pulse's chirp profile is similar to a classical chirp profile created only by self-phase modulation nonlinearity. As the path gets longer (Fig.6B-Fig.6D), an influence of dispersion increases. As a common result of self-phase modulation and dispersion the pulse's chirp profile transforms in the following way: in its central part a region A of a linear dependence on time of instantaneous wavelengths appears; the longer the distance, the wider the region A. At the distance L3 (Fig.6C), the region A of a linear chirp covers almost the whole spectral width of the broadened radiation. Regions of a nonlinear chirp are present only in peripheral parts of the pulse, where the normalized time is smaller than -2 (Fig.7, region B) and is greater than +2 (Fig.7, region C). Here intensity is negligibly low. At longer distances (Fig.6D), a shape of the chirp profile no longer noticeably changes although phasing between spectral components still continues to change due to dispersion.

The core of this invention lies in the determination of numerous parameters of the system in order to get the sufficient spectral broadening and at the same time the required shape of chirp profile. These are: geometrical parameters of the fiber-optical oscillator 8 and the amplification system 9 as well as their doping levels, also a length of the element 10. Curves of Fig.5A-Fig.6D represent spectral intensities and chirp profiles of radiation 12 at the output of the element 10, where L1, L2, L3, L4 is a sum length of all foregoing system elements. By choosing convenient geometrical parameters and doping levels of the oscillator 8 and amplifiers 9, the most easily variable parameter is the length of the element 10. Chirp profiles depicted in the drawings Fig.6A and Fig.6B are not suitable for the purposes of this invention. The length of the element 10 should be chosen so that the pulse's chirp profile becomes similar to a shape 29, depicted in Fig.6C, or to a shape 30 depicted in Fig.6D, wherein spectral broadening is sufficient and the central part can be approximated by a single or two lines (the length of the whole system equals to L3 or L4).

Fig.7 illustrates that, having a chirp profile of the shape 29, there is a freedom to select two linearly-chirped portions of the spectrum D and E which differ in their central wavelength and width. Radiation of these two portions of the spectrum will be compressible down to their transform-limited pulse duration even with a prism or grating pair. It is also seen in time domain (curve 31 - normalized intensity dependence on time, or pulse envelope, before extracting said potions D, E of the spectrum): intensities of nonlinearly chirped regions B, C are negligible, while under the whole pulse envelope chirp is linear. It is easy to select the linearly-chirped portion D of the spectrum at λ₁ = 1030nm having a width Δλ₁ of (2-10)nm destined for Yb-amplifier. It is also easy to select the linearly-chirped portion E of the spectrum at λ₂ = 1064nm having a width Δλ₂ ≤ 1nm destined for Nd:YAG amplifier. Radiation of the portion D is outcoupled through the first output channel of the master generator 4, radiation of the portion E - through the second channel of the master generator 4. Energy that goes into output pulses 6, 7 is proportional to integrated intensities of spectral components or to the areas under segments I_{D}, I_{E} of curve 31.

It is also evident from the curve 31 that spectral components constituting the portion D are delayed in time with respect to spectral components of the portion E. Therefore, the pulse 6 always occurs later than the pulse 7. Since the initial oscillator 8 of this invention has an inherent energy and pulse duration stability, also all components of the master generator 4 are fiber-optical and do not suffer from environmental impacts, this ensures a reproducibility of chirp profile and, therefore, a constant time delay between pulses 6 and 7. Their time jitter does not exceed tens of femtoseconds.

According to other embodiments of this invention, radiation 7 of the second output channel of the master generator 4 can be matched to any other active medium having a stimulated emission line within (1040-1070)nm spectral range. As it is seen from Fig.7, the second portion E of the spectrum can be selected in a wide range of wavelengths. When the initial wavelength λ₀ = 1047nm, the spectrally broadened radiation has spectral components up to 1073nm. Therefore, even without altering geometrical and doping parameters of the master generator's components, radiation 7 of the second output channel may be adapted to any of Nd:YAG, Nd:YVO₄ (λ₂ = 1064nm), Nd:YLF (λ₂ = 1047nm or 1053nm), Nd:GdVO₄ (λ₂ = 1063nm), Nd:KGW (λ₂ = 1067nm) active medium of the pump pulse amplifier 5. Energy of the pulse 7 and a mutual time delay between the pulses 6 and 7 depends on the λ₂ value.

According to yet another group of embodiments of this invention, a different initial wavelength λ₀ is selected, e.g. in a middle between 1030nm and 1047nm, 1053nm, 1063nm or 1067nm. System parameters may have to be altered. As for example, for generation of a broadband pulse 6 destined for Yb:KGW amplifier 23 (λ₁ = 1030nm), which is synchronized with a narrowband pulse 7 destined for Nd:YLF amplifier 5 (λ₂ = 1053nm), it is sufficient to have Δλ = 30nm. Hence, a shorter nonlinear-dispersive medium is suitable.

According to yet another embodiment of this invention, the central wavelength λ₁ of the first output pulse 6 is within a spectral range of Yb-amplifiers but does not coincide with their stimulated emission peak. By shifting λ₁ towards longer wavelengths, there arises a possibility of selecting a wider than 10nm portion D of the spectrum corresponding to a sub-100fs transform-limited pulse duration.

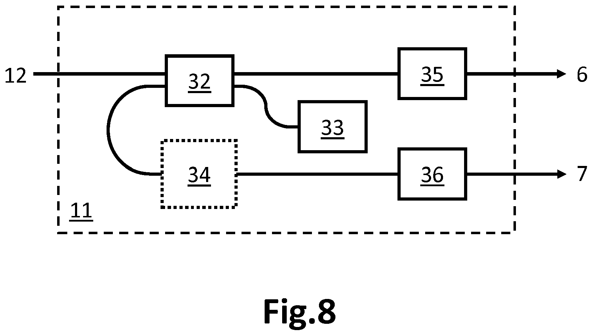

Fig.8 illustrates an example of how the spectral filtering device 11 can be fulfilled by using only fiber-optical elements. The main components are these: a fiber beam splitter 32 and a fiber Bragg grating 33. The beam splitter 32 divides an incident pulse 12 into two parts with a certain splitting ratio. A first part is destined to become a broadband pulse 6 and is directed towards the first output. A second part is firstly directed to the Bragg grating 33 which in reflection works as a narrowband filter. Further, the back-reflected narrowband radiation propagates through the beam splitter 32 again and a part of it (radiation outputted through a free port) is destined to become a narrowband pulse 7. Since energy of the latter radiation is low a pre-amplifier 34, for example an Yb-doped fiber amplifier, may be present. By using additional filters 35, 36 a final forming of said portions D, E of the spectrum and/or elimination of spontaneous emission is done.

Main advantages of the laser source of this invention are high efficiency, simplicity and reliability. First of all, it is due to a high energy conversion efficiency of the picosecond oscillator 8 itself because in a picosecond oscillator energy stored by pumping is used for generation of a narrower spectrum. Secondly, in subsequent stages, spectrum is broadened just to overlap amplification peaks of Yb- and Nd-doped media but not more. Further, picosecond oscillators are reliable and durable. Their unchirped pulses possess high energy and time stability what allows for introducing a predetermined chirp profile. That guarantees high level of synchronization of output dual-wavelength pulses of said source. The all-fiber master generator can operate at high repetition rate, provides high beam quality and is insensitive to environmental factors.

Moreover, spectral broadening up to the bandwidth of not greater than 45nm does not require for a complex and expensive optical element for spectral broadening such as photonic crystal fiber. A standard single-mode optical fiber (SMF) is easy to integrate into a SMF-based laser system: it is easy to fusion splice with adjacent fibers; geometrical parameters may be identical with ones of other system components what leads to the minimal loss at fiber splice joints; the SMF fiber is flexible what means that the whole system may be packed into a small space; there are many commercial suppliers of SMF optical fibers what ensures a relatively low cost.

The linear chirp throughout the whole width of the spectral band allows for wavelength tuning of the output pulses without losing a property of linear chirp required for a further forming and amplification of the pulses, and also ensures ease of compression of parametrically amplified pulse.

The CPA pump pulse amplifier of this invention which receives a narrowband pulse which already has been stretched in time is more compact and/or effective as compared to prior art solutions.

In the OPCPA system with the incorporated laser source of this invention it is possible to obtain an extremely strong parametric amplification and high overall efficiency of the system, as well as high energy and time stability. A feasibility to compress the parametrically amplified radiation down to its transform-limited duration ensures the maximum available peak power of said OPCPA to be obtained.

## Claims

1. Method for generation of optically synchronized dual-wavelength ultrashort light pulses, comprising a generation and pre-amplification (1) of initial laser radiation, spectral broadening (2) and formation (3) of radiations of two output pulses (6, 18), where
- a central wavelength λ₀ of said initial laser radiation is selected from a luminescence band of Yb-doped active media,
- a central wavelength of radiation after said pre-amplification coincides with said central wavelength λ₀ of the initial laser radiation,
- spectrally broadened radiation (12) has a spectral width Δλ that overlaps stimulated emission peaks of Yb-doped and Nd-doped active media,
- radiation of a first output pulse (6) and radiation of a second output pulse (18) are formed from said spectrally broadened radiation (12) by extracting a first portion (D) and a second portion (E) of its spectrum with central wavelengths λ₁, λ₂ and spectral widths Δλ₁, Δλ₂, respectively, while radiation of the second portion (E) of the spectrum is amplified,
wherein
- the central wavelength λ₀ of the initial laser radiation is selected from 1025nm to 1070nm, said initial laser radiation has no chirp and its spectral width Δλ₀ does not exceed 1.5nm and has a pulse duration from 1ps to 5ps,
- said initial laser radiation is selected from a luminescence band of doped fiber active media,
- the spectral width Δλ of said spectrally broadened radiation (12), defined at a 1/10 level of the maximum spectral intensity, is within an interval from 40nm to 45nm,
- the central wavelength λ₁ of the first portion (D) of the spectrum is selected from 1025nm to 1035nm, and its spectral width Δλ₁ is in a range from a few to 10nm,
- the central wavelength λ₂ of the second portion (E) of the spectrum is selected from 1045nm to 1070nm, and its spectral width Δλ₂ is less than 1nm,
- and both the first and the second portions (D, E) of the spectrum possess a linear chirp.

2. Method according to claim 1, wherein
the central wavelength λ₀ of the initial laser radiation is in the middle between the wavelengths λ₁ and λ₂.

3. Method according to any one of claims 1-2, wherein
the spectral width Δλ₀ of the initial laser radiation is less than 1nm.

4. Method according to any one of the preceding claims, wherein
the central wavelength λ₁ of the first extracted portion (D) of the spectrum is equal to 1030nm.

5. Method according to any one of the preceding claims, wherein
the central wavelength λ₂ of the second extracted portion (E) of the spectrum is equal to 1064nm.

6. Laser source configured for generation of optically synchronized dual-wavelength ultrashort light pulses (6, 18), said laser source comprising a master generator (4) and a chirped pulse amplifier (5), where said master generator (4) is composed of optically coupled optical fiber-based components which comprise
- an Yb-doped mode-locked fiber oscillator generating initial laser radiation with a central wavelength λ₀ and a spectral width Δλ₄,
- an amplification system (9) consisting of at least one Yb-doped fiber amplifier for amplification of said initial laser radiation,
- an optical element (10) possessing nonlinear properties which is destined to broaden a spectrum of laser radiation at an output of said amplification system (9) and
- a spectral filtering device (11) destined to extract two portions (D, E) of a spectrum from a spectrally broadened radiation (12) with central wavelengths λ₁, λ₂ and spectral widths Δλ₁, Δλ₂, respectively, and to couple out radiations of said portions (D, E) of the spectrum respectively through a first and a second output channels of said master generator (4);
while said chirped pulse amplifier (5) is destined to amplify radiation of the second portion (E) of the spectrum and comprises a pulse stretcher (13), a quantum amplifier (14) and a pulse compressor (15),
wherein
- said Yb-doped mode-locked fiber oscillator (8) is designed to generate a Fourier-transform-limited pulse with a duration from 1ps to 5ps in a spectral range from 1025nm to 1070nm and with spectral width Δλ₀ not exceeding 1.5nm,
- parameters of the fiber-based optical components (8, 9, 10) are selected so that spectrally broadened radiation (12) has portions (D, E) of the spectrum at wavelengths λ₁, λ₂, wherein
λ₁ is selected from 1025nm to 1035nm,
λ₂ is selected from 1045nm to 1070nm, and where
the spectral width Δλ₁ of the first portion (D) of the spectrum is from a few to 10nm, while
the spectral width Δλ₂ of the second portion (E) of the spectrum is less than 1nm, and both the first and the second portions (D, E) of the spectrum possess a linear chirp.

7. Laser source according to claim 6, wherein
said master generator (4) is based on single-mode optical fibers.

8. Laser source according to any one of claims 6-7, wherein
the optical element (10) which possesses nonlinear properties is a single-mode optical fiber with a length from an interval from 2 to 20 meters.

9. Laser source according to any one of claims 6-8, wherein
said chirped pulse amplifier (5) is based on a Nd-doped solid state active medium.

10. Laser source according to any one of claims 6-8, wherein
said chirped pulse amplifier (5) is based on Yb-doped active medium.

11. Laser source according to any one of claims 6-10, wherein
the pulse stretcher (13) and/or the pulse compressor (15) of said chirped pulse amplifier (5) is a chirped volume Bragg grating.

12. Optical parametric chirped pulse amplifier comprising the laser source according to any one of claims 6-11.

## Patentansprüche

1. Verfahren zur Erzeugung von optisch synchronisierten ultrakurzen Lichtpulsen bei zwei Wellenlängen, umfassend eine Erzeugung und Vorverstärkung (1) einer initialen Laserstrahlung, eine spektrale Verbreiterung (2) und eine Bildung (3) von Strahlungen zweier Ausgangspulse (6, 18), wobei
- eine zentrale Wellenlänge λ₀ der initialen Laserstrahlung aus einem Lumineszenzband von Yb-dotierten aktiven Medien gewählt wird,
- eine zentrale Wellenlänge der Strahlung nach die Vorverstärkung mit der zentralen Wellenlänge λ₀ der initialen Laserstrahlung übereinstimmt,
- die spektral verbreiterte Strahlung (12) hat eine Spektralbreite *Δλ*, die stimulierte Emissionsspitzen von Yb-dotierten und Nd-dotierten aktiven Medien überlappt,
- aus der spektral verbreiterten Strahlung (12) ein erster Ausgangspuls (6) und ein zweiter Ausgangspuls (18) durch Extrahieren eines ersten Teils (D) und eines zweiten Teils (E) mit zentralen Wellenlängen *λ*₁, *λ*₂ bzw. und spektralbreiten *Δλ*₁, *Δλ*₂ bzw. gebildet wird, während die Strahlung des zweiten Teils (E) des Spektrums verstärkt wird,
wobei
- die zentrale Wellenlänge *λ*₀ der initialen Laserstrahlung aus einem Bereich von 1025nm bis 1070nm gewählt wird, der initiale Laserstrahlung keinen Chirp aufweist, seine Spektralbreite *Δλ*₀ 1,5nm nicht überschreitet und eine Pulsdauer von 1ps bis 5ps aufweist,
- die initiale Laserstrahlung aus einem Lumineszenzband von dotierten faseraktiven Medien gewählt wird,
- die Spektralbreite *Δλ* der spektral verbreiterten Strahlung (12), definiert einem 1/10-Pegel der maximalen spektralen Intensität, zwischen 40nm und 45nm liegt.
- die zentrale Wellenlänge *λ*₁ des ersten Teils (D) des Spektrums aus einem Bereich von 1025nm bis 1035nm gewählt wird und seine Spektralbreite *Δλ*₁ in einem Bereich von einigen bis 10nm beträgt,
- die zentrale Wellenlänge *λ*₂ des zweiten Teils (E) des Spektrums aus einem Bereich von 1045nm bis 1070nm gewählt wird und seine Spektralbreite *Δλ₂* weniger als 1nm beträgt,
- und beide der erste und der zweite Teile (D, E) des Spektrums einen linearen Chirp verfügen.

2. Verfahren nach Anspruch 1, wobei die zentrale Wellenlänge *λ*₀ der initialen Laserstrahlung in der Mitte zwischen den Wellenlängen *λ*₁ und *λ*₂ liegt.

3. Verfahren nach einem der Ansprüche 1 bis 2, wobei die Spektralbreite *Δλ*₀ der initialen Laserstrahlung weniger als 1nm beträgt.

4. Verfahren nach einem der vorhergehenden Ansprüche, wobei die zentrale Wellenlänge *λ*₁ des ersten extrahierten Teils (D) des Spektrums 1030nm beträgt.

5. Verfahren nach einem der vorhergehenden Ansprüche, wobei die zentrale Wellenlänge *λ*₂ des zweiten extrahierten Teils (E) des Spektrums 1064nm beträgt.

6. Laserquelle zur Erzeugung von optisch synchronisierten ultrakurzen Lichtimpulsen bei zwei Wellenlängen (6, 18) konfiguriert ist, die Laserquelle umfassend ein Master-Generator (4) und ein Verstärker gechirpter Pulse (5), während der Master-Generator (4) aus optischen gekoppelten faserbasierten optischen Komponenten zusammengesetzt ist, die umfassen
- ein Yb-dotierter modengekoppelter Faseroszillator (8), der eine initiale Laserstrahlung mit einem zentralen Wellenlänge *λ*₀ und einem Spektralbreite *Δλ*₀ erzeugt,
- ein Verstärkersystem (9), bestehend aus mindestens einem Yb-dotierten Faserverstärker zur Vorverstärkung der initialen Laserstrahlung,
- ein optisches Element (10) mit nichtlinearen Eigenschaften zur Verbreiterung eines Spektrums der Laserstrahlung an einem Ausgang des Verstärkungssystems (9) und
- eine Vorrichtung zur spektralen Filterung (11), dazu bestimmt ist, aus einer spektral verbreiterten Strahlung (12) zwei Teile (D, E) mit zentralen Wellenlängen *λ*₁ und *λ*₂ bzw. und den Spektralbreiten *Δλ*₁ und *Δλ*₂, zu extrahieren und Strahlungen dieser Teile (D, E) des Spektrums durch einen ersten und einen zweiten Ausgangskanal des Master-Generators (4) auszukoppeln;
während der Verstärker gechirpter Pulse (5) dazu bestimmt ist, die Strahlung des zweiten Teils (E) des Spektrums zu verstärken, und einen Pulsstrecker (13), einen Quantenverstärker (14) und einen Pulskompressor (15) umfasst,
wobei
- der Yb-dotierte modengekoppelte Faseroszillator (8) ausgebildet ist, einen Fourier-Transformations-begrenzten Puls mit einer Dauer von 1ps bis 5ps in einem Spektralbereich von 1025nm bis 1070nm und einer Spektralbreite *Δλ*₀ die 1,5nm nicht überschreitet, zu erzeugen,
- Parameter der faserbasierten optischen Komponenten (8, 9, 10) so gewählt sind, dass die spektral verbreiterte Strahlung (12) die Teile (D, E) des Spektrums bei Wellenlängen *λ*₁, *λ*₂ aufweist, wobei
die *λ*₁ aus einem Bereich von 1025nm bis 1035nm gewählt wird,
die *λ*₂ aus einem Bereich von 1045nm bis 1070nm gewählt wird, und wobei
die Spektralbreite *Δλ*₁ des ersten Teils (D) des Spektrums von einigen bis 10nm beträgt, während die Spektralbreite *Δλ₂* des zweiten Teils (E) des Spektrums weniger als 1nm beträgt,
- und beide der erste und der zweite Teile (D, E) des Spektrums einen linearen Chirp verfügen.

7. Laserquelle nach Anspruch 6, wobei der Master-Generator (4) auf Single-Mode optischen Fasern basiert ist.

8. Laserquelle nach einem der Ansprüche 6 bis 7, wobei das optische Element (10) mit nichtlinearen Eigenschaften eine Single-Mode optische Faser mit einer Länge von 2 bis 20 Metern ist.

9. Laserquelle nach einem der Ansprüche 6 bis 8, wobei der Verstärker gechirpter Pulse (5) auf einem Nd-dotierten festkörper-aktiven Medium basiert ist.

10. Laserquelle nach einem der Ansprüche 6 bis 8, wobei der Verstärker gechirpter Pulse (5) auf einem Yb-dotierten aktiven Medium basiert ist.

11. Laserquelle nach einem der Ansprüche 6 bis 10, wobei der Pulsstrecker (13) und/oder der Pulskompressor (15) des Verstärkers gechirpter Pulse (5) ein gechirptes Volumen-Bragg-Gitter ist.

12. Optischer parametrischer Verstärker gechirpter Pulse umfassend die Laserquelle nach einem der Ansprüche 6 bis 11.

## Revendications

1. Procédé pour la génération d'impulsions de lumière ultracourtes optiquement synchronisées à deux longueurs d'onde, qui comprend une génération et une pré-amplification (1) d'un rayonnement laser initial, un élargissement spectral (2) et la formation (3) de rayonnements de deux impulsions de sortie (6, 18), où
- une longueur d'onde centrale λ₀ dudit rayonnement laser initial est choisie parmi une bande de luminescence de milieux actifs dopés au Yb,
- une longueur d'onde centrale du rayonnement après ladite pré-amplification coïncide avec ladite longueur d'onde centrale λ₀ du rayonnement laser initial,
- un rayonnement élargi spectralement (12) possède une largeur spectrale Δλ qui chevauche les pics d'émission stimulés de milieux actifs dopés au Yb et au Nd,
- un rayonnement d'une première impulsion de sortie (6) et un rayonnement d'une seconde impulsion de sortie (18) sont formés à partir dudit rayonnement élargi spectralement (12) en extrayant une première partie (D) et une seconde partie (E) de son spectre avec des longueurs d'onde centrales λ₁, λ₂ et des largeurs spectrales Δλ₁, Δλ₂, respectivement, tandis que le rayonnement de la seconde partie (E) du spectre est amplifié, dans lequel
- la longueur d'onde centrale λ₀ du rayonnement laser initial est choisie parmi 1025 nm à 1070 nm, ledit rayonnement laser initial ne présente chirp, et sa largeur spectrale Δλ₀ ne dépasse pas 1,5 nm et présente une durée d'impulsion de 1 ps à 5 ps,
- ledit rayonnement laser initial est choisi parmi une bande de luminescence de milieu actif à fibre dopée,
- la largeur spectrale Δλ dudit rayonnement élargi spectralement (12), définie à un niveau 1/10 de l'intensité spectrale maximale, est comprise dans un intervalle de 40 nm à 45 nm,
- la longueur d'onde centrale λ₁ de la première partie (D) du spectre est choisie parmi 1025 nm à 1035 nm, et sa largeur spectrale Δλ₄ est comprise entre quelques nm et 10 nm,
- la longueur d'onde centrale λ₂ de la seconde partie (E) du spectre est choisie parmi 1045 nm à 1070 nm, et sa largeur spectrale Δλ₂ est inférieure à 1 nm,
- et à la fois la première et la seconde parties (D, E) du spectre présentent un chirp linéaire.

2. Procédé selon la revendication 1, dans lequel
la longueur d'onde centrale λ₀ du rayonnement laser initial est au milieu entre les longueurs d'onde λ₁ et λ₂.

3. Procédé selon l'une quelconque des revendications 1 à 2, dans lequel la largeur spectrale Δλ₀ du rayonnement laser initial est inférieure à 1 nm.

4. Procédé selon l'une quelconque des revendications précédentes, dans lequel la longueur d'onde centrale λ₁ de la première partie extraite (D) du spectre est égale à 1030 nm.

5. Procédé selon l'une quelconque des revendications précédentes, dans lequel la longueur d'onde centrale λ₂ de la seconde partie extraite (E) du spectre est égale à 1064 nm.

6. Source laser configurée pour la génération d'impulsions de lumière ultracourtes (6, 18) optiquement synchronisées à deux longueurs d'onde, ladite source laser comprenant un générateur principal (4) et un amplificateur d'impulsions à dérive en fréquence (5), où ledit générateur principal (4) est constitué de composants à base de fibre optique couplés optiquement qui comprennent
- un oscillateur à fibre à verrouillage de mode dopée au Yb qui génère un rayonnement laser initial avec une longueur d'onde centrale λ₀ et une largeur spectrale Δλ₀,
- un système d'amplification (9) composé d'au moins un amplificateur à fibre dopée au Yb destiné à l'amplification dudit rayonnement laser initial,
- un élément optique (10) qui présente des propriétés non linéaires et qui est destiné à élargir un spectre de rayonnement laser au niveau d'une sortie dudit système d'amplification (9), et
- un dispositif de filtrage spectral (11) destiné à extraire deux parties (D, E) d'un spectre issu d'un rayonnement élargi spectralement (12) avec des longueurs d'onde centrales λ₁, λ₂ et des largeurs spectrales Δλ₁, Δλ₂, respectivement, et à coupler les rayonnements desdites parties (D, E) du spectre respectivement par le biais d'un premier et d'un second canaux de sortie dudit générateur principal (4);
tandis que ledit amplificateur d'impulsions à dérive en fréquence (5) est destiné à amplifier le rayonnement de la seconde partie (E) du spectre et comprend un étireur d'impulsions (13), un amplificateur quantique (14) et un compresseur d'impulsions (15),
dans laquelle
- ledit oscillateur à fibre à verrouillage de mode dopée au Yb (8) est conçu pour générer une impulsion limitée par transformée de Fourier avec une durée de 1 ps à 5 ps dans une plage spectrale comprise entre 1025 nm et 1070 nm et avec la largeur spectrale Δλ₀ qui ne dépasse pas 1,5 nm,
- les paramètres des composants optique à base de fibre (8, 9, 10) sont choisis de sorte que le rayonnement élargi spectralement (12) possède des parties (D, E) du spectre aux longueurs d'onde λ₁, λ₂, où
λ₁ est choisi parmi 1025 nm à 1035 nm,
λ₂ est choisi parmi 1045 nm à 1070 nm, et où
la largeur spectrale Δλ₁ de la première partie (D) du spectre est comprise entre quelques nm et 10 nm, tandis que
la largeur spectrale Δλ₂ de la seconde partie (E) du spectre est inférieure à 1 nm,
et à la fois la première et la seconde parties (D, E) du spectre présentent un chirp linéaire.

7. Source laser selon la revendication 6, dans laquelle
ledit générateur principal (4) est basé sur des fibres optique monomode.

8. Source laser selon l'une quelconque des revendications 6 à 7, dans laquelle l'élément optique (10) qui présente des propriétés non linéaires est une fibre optique monomode avec une longueur de 2 à 20 mètres.

9. Source laser selon l'une quelconque des revendications 6 à 8, dans laquelle ledit amplificateur d'impulsions à dérive en fréquence (5) est basé sur un milieu actif à l'état solide dopé au Nd.

10. Source laser selon l'une quelconque des revendications 6 à 8, dans laquelle ledit amplificateur d'impulsions à dérive en fréquence (5) est basé sur un milieu actif dopé au Yb.

11. Source laser selon l'une quelconque des revendications 6 à 10, dans laquelle
le étireur d'impulsions (13) et/ou le compresseur d'impulsions (15) dudit amplificateur d'impulsions à dérive en fréquence (5) est un réseau de Bragg à volume chirpé.

12. Amplificateur paramétrique d'impulsions à dérive en fréquence qui comprend la source laser selon l'une quelconque des revendications 6 à 11.
